# NEUE EUROPÄISCHE PATENTSCHRIFT

(11) **EP 2 102 518 B2**
(45) Veröffentlichungstag und Bekanntmachung des Hinweises auf die Entscheidung über den Einspruch: **15.10.2014**
(45) Hinweis auf die Patenterteilung: 11.05.2011
(21) Anmeldenummer: 07856075.2
(22) Anmeldetag: 11.12.2007
(51) Int. Cl.: F16D 3/227, B60K 17/22

(54) **LÄNGSANTRIEBSWELLE FÜR KRAFTFAHRZEUGE**
LONGITUDINAL DRIVE SHAFT FOR MOTOR VEHICLES
ARBRE D'ENTRAÎNEMENT LONGITUDINAL POUR AUTOMOBILES

(30) Priorität: 22.12.2006 DE 102006060879; 29.03.2007 DE 102007015074
(43) Veröffentlichungstag der Anmeldung: 23.09.2009
(73) Patentinhaber: IFA-Technologies GmbH, 39340 Haldensleben (DE)
(72) Erfinder: FROST, Sebastian, 39108 Magdeburg (DE); KOROTWA, Christian, 39112 Magdeburg (DE); LANGER, Gerald, 39345 Bülstringen (DE)
(74) Vertreter: Schuster, Müller & Partner
(86) Internationale Anmeldenummer: PCT/DE2007/002224
(87) Internationale Veröffentlichungsnummer: WO 2008/077371

(56) Entgegenhaltungen:
- WO-A-2004/018247
- DE-A1- 4 224 201
- DE-A1- 10 240 192
- DE-A1- 10 240 192
- DE-A1- 10 357 858
- DE-A1-102004 009 477
- DE-A1-102004 009 477
- DE-A1-102005 029 754
- DE-A1-102005 029 754
- DE-A1-102005 029 754
- DE-A1-102005 036 789
- DE-A1-102005 036 789
- DE-B3-102004 052 313
- DE-B3-102004 052 313
- DE-C1- 4 344 177
- DE-C1- 19 652 100
- DE-C1- 19 652 100
- DE-C1- 19 943 880
- US-A1- 2003 008 716
- US-A1- 2003 045 365
- US-A1- 2003 045 365
- US-A1- 2003 171 154
- US-A1- 2003 196 846
- US-A1- 2005 130 750
- US-A1- 2005 130 750
- H.CH.GRAF V.SEHERR-THOSS,SCHMELZ,AUCKTOR: 'Gelenke und Gelenkwellen', Bd. 2, 2002, ISBN 3-540-41759-1

## Beschreibung

Die Erfindung betrifft eine Längsantriebswelle für Kraftfahrzeuge zur Übertragung eines Drehmoments, bestehend aus zwei oder mehreren Wellenabschnitten sowie einem Gelenk, bei dem die Wellenabschnitte mittels einer Zwischenwelle oder eines Zapfens verbunden sind.

Derartige Längsantriebswellen sind allgemein bekannt und dienen sowohl zur Übertragung eines Drehmoments und sind andererseits so ausgebildet, dass in einem "Crashfall", das heißt bei einem Frontal-Auffahrunfall oder bei einem Crash in Längsrichtung des Fahrzeuges, die Längswelle sich in axialer Richtung verkürzt, um ein Ausknicken und Eindringen in das Innere des Kraftfahrzeuges zu vermeiden und gleichfalls dadurch Verletzungen der im Fahrgastraum befindlichen Personen weitestgehend auszuschließen. Eine Längsantriebswelle für Kraftfahrzeuge der oben beschriebenen Gattung ist mit der DE 43 44'177 C1 bekannt geworden.
Diese Längsantriebswelle für Kraftfahrzeuge ist mit einem Zwischengelenk, das als axialverschiebbares Kugeldrehgelenk ausgebildet ist und zumindest aus einem Gelenkaußenteil mit längs verlaufenden ersten Kugelbahnen, einem Gelenkinnenteil mit längs verlaufenden zweiten Kugelbahnen und sich jeweils radial gegenüberliegenden ersten und zweiten Kugelbahnen geführten Drehmoment übertragenden Kugeln besteht. Dabei sind das Gelenkaußenteil mit der Rohrwelle und das Gelenkinnenteil mit dem Wellenzapfen fest verbunden. Die Innendurchmesser des Gelenkaußenteiles oder der anschließenden Rohrwelle im Anschluss an den vom Gelenkinnenteil im Betrieb bei Schiebebewegungen eingenommenen Freiraum in Richtung zur Rohrwelle hin sind in ihren Abmaßen kleiner ausgebildet als der Außendurchmesser des Gelenkinnenteiles.
Durch diese Ausbildung soll erreicht werden, dass in einem "Crashfall" über die Längswelle Energie durch Reibung und durch Aufweitung der sich ineinander verschiebenden Teile der Antriebswelle abgebaut bzw. absorbiert wird.
Nachteilig dabei ist, dass es bei so einem Vorgang nicht auszuschließen ist, dass infolge der im Crashfall wirkenden Kräfte ein Ausknicken der Längsantriebswelle erfolgen kann.

Eine weitere Lösung dieser Art ist mit der DE 42 24 201 C2 bekannt geworden, mit der eine Längswelle im Antriebsstrang eines Fahrzeuges vorgestellt wird, welche dadurch gekennzeichnet ist, dass durch eine Verbindung zwischen dem Gelenkinnenteil und dem Wellenzapfen, die bei einer vorgegebenen Axialkraft im Antriebsstrang lösbar ist, somit in einem derartigen Fall die übrigen Teile der Längswelle unbeschädigt bleiben sollen.
Zu diesem Zweck sind axiale Anschlagmittel im Gelenkaußenteil für das Gelenkinnenteil vorgesehen, an denen sich das Gelenkinnenteil beim Lösen der Verbindung zwischen dem Gelenkinnenteil und dem Wellenzapfen und einem sich anschließenden Durchschieben des Wellenzapfens durch das Gelenkinnenteil abstützen soll.
Gleichfalls soll eine Abstützung durch einen Einführkonus im Gelenkaußenteil oder in einem sich daran anschließenden mit dem Gelenkaußenteil verbundenen Bodenteil erfolgen. Besonders vorteilhaft wird herausgestellt, dass durch die Mittel zur Aufnahme von Reibungs- oder Verformungsarbeit beim axialen Durchschieben des Wellenzapfens durch das Gelenkinnenteil und in den Einführkonus sich eine gezielte, positiv von Null abweichende Axialkraft mit kontrollierter Energieaufnahme einstellen lassen kann.

Auch dieser Lösung haftet der Nachteil an, dass in einem Havariefall nicht auszuschließen ist, dass diese Längsantriebswelle gleichfalls ausknickt und in den Fahrgastinnenraum eindringt, was zu Verletzungen der im Fahrgastinnenraum befindlichen Personen führen kann. Weiterhin ist die maximale Länge des Crashweges mit dieser Variante sehr ungünstig, da der Wellenzapfen nicht beliebig lang gewählt werden kann, da bei einem Wellenzapfen größerer Länge sich biegekritische Drehzahlen der Längswelle herausbilden, die gleichfalls ungünstig auf das Stabilitätssystem einer derart ausgebildeten Längswelle wirken.

Es sei ferner auf eine Antriebsanordnung mit einer Längsantriebswelle und einem Zwischenlager, welche in Kraftfahrzeugen benutzt werden, hingewiesen, die in der DE 199 43 880 C1, welche alle Merkmale des Oberbegriffs des Anspruchs 1 offenbart, beschrieben ist.

Diese Längsantriebswelle besteht aus einem ersten Wellenabschnitt mit einem ersten Gelenk, einem zweiten Wellenabschnitt mit einem zweiten Gelenk sowie einem dritten Gelenk in Form eines Gleichlauffestgelenkes, welches den ersten Wellenabschnitt und den zweiten Wellenabschnitt verbindet und das Zwischenlager, welches benachbart zum Gleichlauffestgelenk dem ersten Wellenabschnitt zugeordnet ist, ein Wälzlager umfasst. Bei dieser Antriebsanordnung sind die kleinsten Innendurchmesser des Gelenkaußenteiles, des zweiten Wellenrohres, des Gelenkaußenteiles vom Gelenk und des zum zweiten Wellenabschnitt gehörenden Wellenrohres größer als die größten Außendurchmesser des ersten Wellenabschnittes und des Wälzlagers vom Zwischenlager.
Durch diese Anordnung soll ein teleskopartiges und im Wesentlichen kraftloses Ineinanderverfahren der beiden Wellenabschnitte möglich sein, wenn der in axialer Richtung maximal zulässige Verschiebeweg des ersten Gelenkes und des zweiten Gelenkes, beispielsweise durch einen Frontalaufprall des Fahrzeuges, überschritten wird.
Durch die unterschiedliche Dimensionierung der betreffenden Funktionsteile der Antriebsordnung, um diese zueinander teleskopieren zu können, wird sicher ein Ineinanderverschieben dieser Teile gewährleistet, allerdings bedarf es doch erheblicher Krafteinwirkungen, um diesen Vorgang des Teleskopierens einzuleiten und gleichfalls nicht ausschließen ist, dass die Längsantriebswelle ausknickt.

Der Erfindung liegt daher die Aufgabe zugrunde, eine Längsantriebswelle für Kraftfahrzeuge derart weiterzuentwickeln, dass in einem Crashfall die einzelnen funktionsbestimmenden Bauteile der Längsantriebswelle ineinander verschiebbar sind und ein unkontrolliertes Ausknicken der Wellenabschnitte der Antriebswelle vermieden wird.

Erfindungsgemäß wird diese Aufgabe mit den Merkmalen des Anspruches 1 gelöst, besondere Ausgestaltungen und vorteilhafte Lösungen sind in den Unteransprüchen angegeben.

So wurde eine Längsantriebswelle für Kraftfahrzeuge geschaffen, welche zur Übertragung eines Drehmoments dient und aus zwei oder mehreren Wellenabschnitten besteht, die über eine Zwischenwelle miteinander verbunden sind, welche wiederum fest mit einem Wellenabschnitt verbunden sind.

Die Verbindung erfolgt zum einen über ein mit dem ersten Wellenabschnitt angeordnetes Gleichlaufverschiebegelenk, in dessen Kugelnabe die Zwischenwelle eingepasst ist. Auf der gegenüberliegenden Seite ist die Zwischenwelle in einer Buchse gelagert, die fest mit dem Rohr des zweiten Wellenabschnittes verbunden ist.
Eine vorgesehene Mittenlagerung zwischen den beiden Wellenabschnitten ist so gestaltet und ausgeführt, dass die Zwischenwelle Träger der Mittenlagerung sind.

Der zweite Wellenabschnitt der Längsantriebswelle sowie die Mittenlagerung, hier das Wälzlager des Mittenlagers, sind in ihren äußeren Abmaßen so dimensioniert und ausgebildet, dass sich diese bei einem Frontalaufprall, einem Crashfall, in das Innere des ersten Wellenabschnittes teleskopieren können und somit gesichert ist, dass die gesamte Längsantriebswelle und auch einzelne Teilstücke nicht mehr ausknicken.
Das im ersten Wellenabschnitt angeordnete Gleichlaufverschiebegelenk ist fest mit dem Außenrohr des ersten Wellenabschnittes verbunden, wobei der Gelenkaußenring und die Kugelnabe des Gleichlaufverschiebegelenkes an ihrer inneren bzw. äußeren Wandung mit Kugelrillen ausgebildet sind, in denen Kugeln führend und umlaufend angeordnet sind.

Das Gleichlaufverschiebegelenk ist einerseits mittels einer Dichtkappe und einem Dichtungsbalg zur Atmosphäre abgedichtet und auf der gegenüberliegenden Seite mit einem Verschlussdeckel versehen, der verhindert, dass in das Innere des Gleichlaufverschiebegelenkes Fremdkörper eindringen können, die Verschmutzungen und somit Betriebsstörungen verursachen und gleichfalls gewährleistet wird, dass Schmiermittel aus dem Inneren des Gleichlaufverschiebegelenkes nicht austreten kann.
Dieser Verschlussdeckel dient nicht nur zur Verhinderung des Schmiermittelaustrittes bzw. des Eintrittes von Schadstoffen in das Gleichlaufverschiebegelenk, vielmehr ist dieser Verschlussdeckel als ein Sicherheitselement ausgebildet, welcher Sollbruchstellen besitzt, die in einem Havariefall zerstört werden und ein freies Teleskopieren des einen Wellenabschnittes in den anderen gewährleistet.
Der Verschlussdeckel ist als ein trichterförmiges Formteil ausgebildet, besitzt einen äußeren Bund mit nachgeordneter Führungsschräge, die übergeht in den zylindrischen Teil des Verschlussdeckels, der endseitig durch das flächige Teil verschlossen wird.
Die Sollbruchstellen des Verschlussdeckels werden zum einen durch die Befestigung des Verschlussdeckels zum Gleichlaufverschiebegelenk oder zur Innenwandung des Rohres des ersten Wellenabschnittes gebildet oder in einer weiteren Ausführungsvariante im Bereich des Überganges vom zylindrischen Teil des Verschlussdeckels zu dem flächigen Teil.
Neben der Funktion des Abdichtens des Gleichlaufverschiebegelenkes und der Herausbildung von Sollbruchstellen erfüllt der Verschlussdeckel in einem Crashfall die Funktion eines Führungselementes, dies derart, dass die teleskopierten Teile, die Zwischenwelle, das Wälzlager der Mittenlagerung und die Kugeln, der Käfig sowie die Kugelnabe des Gleichlaufverschiebegelenkes im zylindrischen Teil des Verschlussdeckels geführt werden.

Dabei ist von Vorteil, dass das Gleichlaufverschiebegelenk nahezu kraftlos in seine Einzelteile zerfällt und die vorgesehenen Sollbruchstellen außerhalb des Verschiebegelenkes liegen, so dass, abgesehen von der Zerstörung des Deckels, im weitesten Sinne ein ungehindertes Teleskopieren der im Crashfall verschobenen Funktionsteile ermöglichst wird, was in der Gesamtheit auf den gesamten Teleskopierprozess positiv wirkt.

Mit nachfolgendem Ausführungsbeispiel soll die Erfindung näher erläutert werden.

In der dazugehörigen Zeichnung zeigen
- Figur 1:: die Längsantriebswelle im Betriebszustand,
- Figur 2:: die Längsantriebswelle in einer ersten Crashfallposition,
- Figur 3:: die Längsantriebswelle in einer weiteren Crashfallposition mit dem wirk- sam werden der ersten Sollbruchstelle und
- Figur 4:: die Längsantriebswelle in einer weiteren Crashposition mit dem wirksam werden der zweiten Sollbruchstelle.

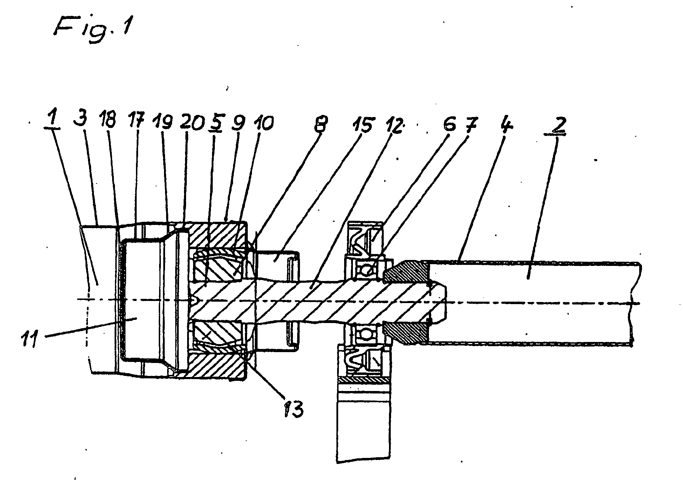

Die Ausbildung der Längsantriebswelle ist in einer prinziphaften Darstellung in der Figur 1 gezeigt.
Diese besteht aus dem ersten und zweiten Wellenabschnitt 1; 2, welche aus je einem Rohr 3 und 4 bestehen, die über eine Zwischenwelle 12 ausgebildet, miteinander verbunden sind. Zwischen den beiden Wellenabschnitten 1; 2 ist die Mittenlagerung 6 vorgesehen, deren Wälzlager 7 tragend auf der Zwischenwelle 12 vorgesehen ist.

In der weiteren Folge wird nur noch Bezug genommen auf eine Zwischenwelle.
Der erste Wellenabschnitt 1 besteht aus dem Rohr 3, in dem bzw. zu dem das Gleichlaufverschiebegelenk 5 angeordnet ist.
Das Gleichlaufverschiebegelenk 5 besteht aus der Kugelnabe 8, die auf der Zwischenwelle 12 angeordnet ist, ferner aus dem Gelenkaußenring 9, dem Käfig 10 und den nicht näher dargestellten Kugelrillen, die im Gelenkaußenring 9 und der Kugelnabe 8 vorgesehen sind, in denen Kugeln 13 umlaufen.
Das Gleichlaufverschiebegelenk 5 ist rechtsseitig mit einer Dichtkappe 15 und einem nicht näher dargestellten Dichtbalg abgedichtet und linksseitig vom Gleichlaufverschiebegelenk 5 ist zu diesem ein als Sicherungselement fungierender Verschlussdeckel 11 vorgesehen.

Dieser Verschlussdeckel 11 ist aus einem dünnwandigen Material, beispielsweise einem Blech hergestellt und als ein Formteil ausgebildet. Er besteht aus einem äußeren umlaufenden Bund 20 und einem zylindrischen Teil 17, die über eine Führungsschräge 19 miteinander verbunden sind.
Endseitig vom Verschlussdeckel 11 ist dieser mit einem flächigen Teil 18 ausgebildet, welches den Verschlussdeckel 11 und im eingebauten Zustand das Gleichlaufverschiebegelenk 5 abdichtet.
Aus der Figur 1 ergibt sich, dass der Verschlussdeckel 11 mit dem Gelenkaußenring 9 des Gleichlaufverschiebegelenkes 5 verbunden ist.
Diese Verbindungsstelle stellt eine erste Sollbruchstelle 14 dar, deren Aufgabe es ist, bei einem Crashfall in Funktion zu treten, was heißt, dass hier die Verbindung zwischen dem Verschlussdeckel 11 und dem Gleichlaufverschiebegelenk 5 gelöst bzw. aufgehoben wird, um ein Teleskopieren des zweiten Wellenabschnittes 2 in den ersten Wellenabschnitt 1 zu ermöglichen.

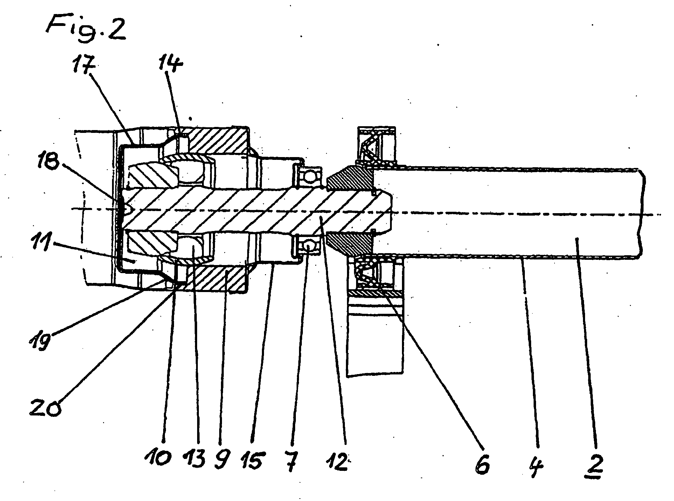

Eine erste Position des Verschiebens des Wellenabschnittes 2 in Richtung des Gleichlaufverschiebegelenkes 5 ist in der Figur 2 gezeigt, aus der gleichfalls ersichtlich ist, dass bereits der Wellenabschnitt 2 so weit nach links verschoben wurde, dass das Wälzlager 7 aus der Mittenlagerung 6 herausgedrückt wurde und die Zwischenwelle sowie die Kugelnabe an den Verschlussdeckel 11 anstoßen bzw. zum Anliegen kommen. Während des Verschiebens erfolgte gleichfalls eine axiale Belastung auf das Gleichlaufverschiebegelenk 5, dies mit der Folge, dass sich die Kugelnabe 8 zu einem bestimmten Teil aus dem Gelenkaußenring 9 herausbewegt hat und die Zwischenwelle 12 an der Innenseite des flächigen Teiles des Verschlussdeckels 11 zum Anliegen gekommen ist.
In dieser Position ist die Verbindung zwischen dem Verschlussdeckel 11 und dem Gleichlaufverschiebegelenk 5 noch gegeben, wie die mit der Kennzahl 14 bezeichnete Sollbruchstelle in der Figur 2 dokumentiert.
Beim weiteren Eindringen des Wellenabschnittes 2 in das Gleichlaufverschiebegelenk 5 und in der Folge in das Innere des Rohres 3, tritt die Sollbruchstelle 14 in Funktion, indem die Verbindung zwischen dem Verschlussdeckel 11 und dem Gleichlaufverschiebegelenk 5 unterbrochen wird.

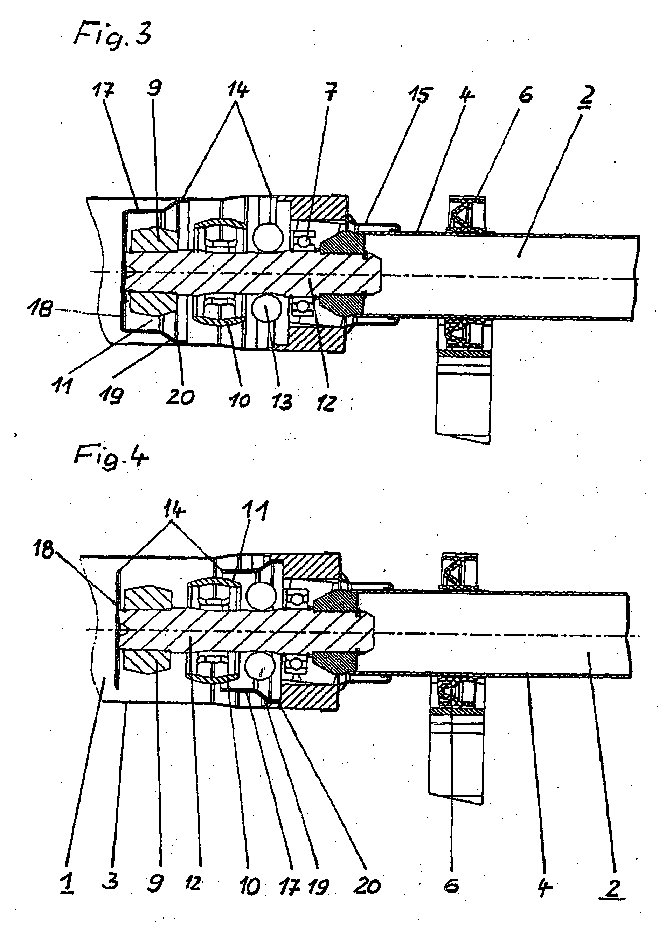

Die Figur 3 zeigt bereits die Position, dass das Teleskopieren des Wellenabschnittes 2 in den Wellenabschnitt 1 so weit fortgeschritten ist, dass auch die Kugeln 13 aus dem Käfig 10 ausgetreten sind und im Zwischenraum zwischen der Kugelnabe 8 und dem Wälzlager 7 sich befinden, analog dazu gleichfalls der Käfig 10.
Aus dieser Figur 3 ergibt sich auch, wie der Verschlussdeckel 11 seine Führungsaufgabe erfüllt, indem der Verschlussdeckel 11 über seinen äußeren Bund 20 an der Innenwandung vom Rohr 3 entlang gleitet und somit den teleskopierenden Funktionselementen eine Führung verleiht und ein Ausknicken der Längsantriebswelle verhindert wird. Das Wirksamwerden der zweiten Sollbruchstelle 14 des Verschlussdeckels 11 ist in der Figur 4 gezeigt. Hier ist der Verschlussdeckel 11 so ausgebildet, dass die Sollbruchstelle 14 im Bereich des Überganges vom zylindrischen Teil 17 zum flächigen Teil 18 liegt und an dieser Stelle auch die Zerstörung des Verschlussdeckels 11 erfolgt, wie sich aus Figur 4 ergibt.
Dabei ist diese Sollbruchstelle 14 so dimensioniert, dass die Kugelnabe 8 nicht den gesamten Verschlussdeckel 11 aus dem Gelenkaußenring 9 des Gleichlaufverschiebegelenkes 5 herausdrückt, sondern die Kugelnabe 8 den vorderen Teil, den flächigen Teil 18 des Verschlussdeckels 11 im weitesten Sinne ausstanzt, somit der Weg für das weitere Verschieben der teleskopierenden Bauteile freigegeben ist, wobei bei dieser Ausführung der zylindrische Teil 17 vom Verschlussdeckel 11 die Führungsfunktion dieser Teile übernimmt.

## Patentansprüche

1. Längsantriebswelle für Kraftfahrzeuge zur Übertragung eines Drehmoments, bestehend aus zwei oder mehreren Wellenabschnitten (1; 2), ausgebildet als Rohre (3; 4), die über eine Zwischenwelle (12) miteinander verbunden sind, in Richtung zum Wellenabschnitt (2) ist die Zwischenwelle (12) Träger eines Mittenlagers (6), in Richtung zum Wellenabschnitt (1) ist die Zwischenwelle (12) über das im Rohr (3) fest angeordnete Gelenk verbunden, und die größenmäßige Ausbildung der sich in einem Crashfall verschiebenden Teile des Mittenlagers (6) sowie des Wellenabschnittes (2) sind kleiner als der Innendurchmesser vom Rohr (3) des Wellenabschnittes (1) ausgebildet, wobei der Innendurchmesser des Gelenkaußenringes (9) größer ist als die Außendurchmesser vom Wälzlager (7) des Mittenlagers (6) und des Rohres (4) des Wellenabschnittes (2), **dadurch gekennzeichnet, dass**
- das Gelenk als ein aus einem Gelenkaußenring (9), einer Kugelnabe (8), Kugeln (13), die in Kugelrillen vom Gelenkaußenring (9) und der Kugelnabe (8) führend umlaufen, und aus einem Käfig (10) bestehendes Gleichlaufverschiebegelenk (5) ausgebildet ist,
- das Gleichlaufverschiebegelenk (5) in Richtung des Wellenabschnittes (2) mit einer Dichtkappe (15) und einem Dichtbalg abgedichtet ist, und
- dass dem Gleichlaufverschiebegelenk (5) zum Wellenabschnitt (1) und in das Innere des Rohres (3) hineinragend ein als Führungs- und Sicherungselement ausgebildeter Verschlussdeckel (11) zugeordnet ist, und
- dass die Verbindung des Verschlussdeckels (11) zum Gelenkaußenring (9) als Sollbruchstelle (14) ausgebildet ist und der Verschlussdeckel (11) Sollbruchstellen (14) besitzt.

2. Längsantriebswelle nach Anspruch 1, **dadurch gekennzeichnet, dass** der Verschlussdeckel (11) ein aus einem dünnwandigen Material hergestelltes Formteil ist, bestehend aus einem Befestigungsbund (20), einem zylindrischen Teil (17), einem flächigen Teil (18) und einer Führungsschräge (19) ausgebildet ist.

3. Längsantriebswelle nach Anspruch 2, **dadurch gekennzeichnet, dass**
die Übergangsstelle vom zylindrischen Teil (17) zum flächigen Teil (18) des Verschlussdeckels (11) als Sollbruchstelle ausgebildet ist.

4. Längsantriebswelle nach Anspruch 2 oder 3, **dadurch gekennzeichnet, dass**
der zylindrische Teil (17) vom Verschlussdeckel (11) im Crashfall als Führung der in das Innere des Rohres (3) vom Wellenabschnitt (1) teleskopierenden Bauteile dient und die Führungsschräge (19) als Einführkonus ausgebildet ist.

5. Längsantriebswelle nach einem der vorhergehenden Ansprüche, **dadurch gekennzeichnet, dass**
der Verschlussdeckel (11) so gestaltet ist, dass sich bei einem Crashfall sein zylindrischer Teil (17), seine Führungsschräge (19) und/oder sein Befestigungsbund (20) aufweiten bzw. aufstülpen und somit führend wirken.

## Claims

1. Longitudinal vehicle drive shaft for transmission of torque, comprising two or more shaft sections (1; 2), executed as tubes (3; 4), connected to each other by an intermediate shaft (12); towards shaft section (2), the intermediate shaft (12) carries a central bearing (6), towards shaft section (1), the intermediate shaft (12) is connected via the firmly installed joint in the tube (3), and the size of the central bearing (6) parts and shaft section (2) that are displaced in a crash is smaller than the inner diameter of the tube (3) of shaft section (1), with the inner diameter of the outer articulation ring (9) being larger than the outer diameters of the roller bearing (7) of the central bearing (6) and the tube (4) of shaft section (2), **characterised in that**
- the joint comprises an outer articulation ring (9), a ball hub (8), balls (13) in leading circulation in ball grooves of the outer articulation ring (9) and the ball hub (8), and a constant velocity plunging joint (5) consisting of a cage (10),
- the constant velocity plunging joint (5) is sealed towards the shaft section (2) with a sealing cap (15) and a sealing bellows and
- that the constant velocity plunging joint (5), protruding towards the shaft section (1) and into the interior of the tube (3), is assigned to a closure lid (11) formed as a guidance and safety element, and
- that the connection of the closure lid (11) to the outer joint ring (9) is formed as a predetermined breaking point (14) and the closure lid (11) has predetermined breaking points (14).

2. Longitudinal drive shaft according to claim 1, **characterised in that**
the closure lid (11) is a moulded part made from thin-walled material, comprising an attachment collar (20), a cylindrical part (17), a flat part (18) and a guidance slope (19).

3. Longitudinal drive shaft according to claim 2, **characterised in that**
the transition part between the cylindrical part (17) and the flat part (18) of the closure lids (11) is a predetermined breaking point.

4. Longitudinal drive shaft according to claim 2 or 3, **characterised in that**
the cylindrical part (17) of the closure lid (11) serves as guide for the components expanding into the interior of the tube (3) of shaft section (1) in case of a crash and the guidance slope (19) is built as insertion cone.

5. Longitudinal drive shaft according to one of the above claims, **characterised in that**
the closure lid (11) is designed so that its cylindrical part (17), guidance slope (19) and/or attachment collar (20) expand or fold open in case of crash and thus have a guiding effect.

## Revendications

1. Arbre moteur longitudinal destiné aux véhicules automobiles pour la transmission d'un couple, composé de deux ou plusieurs tronçons d'arbre (1; 2), conçu sous forme de tubes (3; 4), mutuellement reliés par un arbre intermédiaire (12) ; en direction du tronçon d'arbre (2), l'arbre intermédiaire (12) supporte un palier central (6) ; en direction du tronçon d'arbre (1), l'arbre intermédiaire (12) est relié par l'articulation fixée dans le tube (3) et la conception selon la taille des pièces du palier central (6) ainsi que du tronçon d'arbre (2), se déplaçant dans une chute, sont inférieurs au diamètre intérieur du tube (3) du tronçon d'arbre (1), le diamètre intérieur de la bague extérieure de joint (9) étant supérieur aux diamètres extérieurs du roulement (7) du palier central (6) et du tube (4) du tronçon d'arbre (2), **caractérisé par le fait**
- **que** l'articulation est conçue sous forme de joint coulissant homocinétique (5) composé d'une bague extérieure de joint (9), d'un moyeu sphérique (8), de billes (13) qui circulent dans les guidages de billes de la bague extérieure de joint (9) et du moyeu sphérique (8) et d'une cage (10),
- **que** le joint coulissant homocinétique (5) est étanchéifié dans le sens du tronçon d'arbre (2) à l'aide d'un capuchon d'étanchéité (15) et d'un soufflet d'étanchéité et
- **qu'**un couvercle d'obturation (11) conçu comme élément de guidage et de sécurité est affecté au joint coulissant homocinétique (5) pour le tronçon d'arbre (1) et dépassant l'intérieur du tube (3) et
- **que** la liaison du couvercle d'obturation (11) avec la bague extérieure de joint (9) est conçue comme section de rupture intentionnellement prévue (14) et que le couvercle d'obturation (11) comporte des sections de rupture intentionnellement prévues (14).

2. Arbre moteur longitudinal conformément à la revendication n°1, **caractérisé par le fait**
**que** le couvercle d'obturation (11) est une pièce moulée, réalisée à partir d'une matière à paroi mince, composée d'un collet de fixation (20), d'une pièce cylindrique (17), d'une pièce plate (18) et d'une rampe de guidage (19).

3. Arbre moteur longitudinal conformément à la revendication n°2, **caractérisé par le fait**
**que** le point de transition de la pièce cylindrique (17) avec la pièce plate (18) du couvercle d'obturation (11) est conçu sous forme de section de rupture intentionnellement prévue.

4. Arbre moteur longitudinal conformément aux revendications n°2 ou n°3, **caractérisé par le fait**
**que** la pièce cylindrique (17) du couvercle d'obturation (11) en cas de chute sert de guidage des composants téléscopiques à l'intérieur du tube (3) depuis le tronçon d'arbre (1) et la rampe de guidage (19) est conçue sous forme de cône d'introduction.

5. Arbre moteur longitudinal conformément à l'une des revendications précédentes, **caractérisé par le fait**
**que** le couvercle d'obturation (11) est conçu de sorte que sa pièce cylindrique (17), sa rampe de guidage (19) et/ou son collet de fixation (20) s'élargissent et/ou s'enfoncent et ont ainsi une action de guidage en cas de chute.
